# EUROPEAN PATENT APPLICATION

(11) **EP 2 575 099 A1**
(43) Date of publication of application: **03.04.2013**
(21) Application number: 11194157.1
(22) Date of filing: 16.12.2011
(51) Int. Cl.: G06Q 20/10, G06Q 20/12, G06Q 20/20, G06Q 20/32, G06Q 20/42

(54) **Electronic funds transfer**

(30) Priority: 30.09.2011 IN MU28102011
(71) Applicant: Tata Consultancy Services Limited, 400021 Mumbay (IN)
(72) Inventor: Shirol, Ashok Vijaykumar, 560066 Kamataka (IN)
(74) Representative: Regimbeau

(57) **Abstract**

Described herein is a method for secure transfer of funds. The method includes receiving a funds transfer request from a user on a transaction initiating channel (106), following a first authentication, and verifying the first authentication on a transaction authorization channel (110) based on a second authentication, wherein the second authentication is based partly on at least one request for an information element, wherein the information element includes one or more non-repeating information elements exclusively associated with the user and known to a source authorizing the funds transfer request.

## Description

### TECHNICAL FIELD

The present subject matter, in general, relates to electronic transfer of funds and, in particular, relates to systems and methods for secure transfer of funds initiated over an electronic channel.

### BACKGROUND

In today's world, a large number of people utilize web-based means supported by financial institutions, such as banks, to initiate fund transfers to desired payees. These financial institutions, in order to protect interests of their customers, incorporate security mechanisms by which easy and secure transfer of funds can be achieved. Commonly known security mechanisms as implemented by the financial institutions include validating through user identification (ID) and a password combination, one-time-password options, questions, and answers-based verification, to name a few. Nevertheless, in the current scenario where hackers, say through malware present in one's system, can easily deploy "Man-In-the-Middle" (MITM) and other such attacks, all types of fund transfers are susceptible to fraud, theft or interpolation.

Banks, in particular, are known to have lost significant amounts of money to such fraudulent transfer attacks in the recent past. Even point-of-sale transactions, in which a customer pays through his or her debit or credit cards following approval from a respective bank, are also susceptible to such attacks.

### SUMMARY

The present subject matter describes concepts related to secure electronic funds transfer, which are further described below in detail. This summary is not intended to identify essential features of the claimed subject matter nor is it intended for use in determining or limiting the scope of the claimed subject matter.

In an implementation, a method for secure transfer of funds includes receiving a funds transfer request from a user, on a transaction initiating channel, following a first authentication. The first authentication is verified on a transaction authorization channel based on a second authentication, which is based partly on at least one information element, wherein the information element includes one or more non-repeating information elements exclusively associated with the user and known to a source authorizing the funds transfer request.

These features and advantages will be better understood by the description that follows.

### BRIEF DESCRIPTION OF THE DRAWINGS

The abovementioned features and aspects and other features and aspects of the present subject matter will be better understood with regard to the following description, appended claims, and accompanying figures. In the figures, the left-most digit(s) of a reference number identifies the figure in which the reference number first appears. The use of the same reference number in different figures indicates similar or identical items.

Fig. 1 illustrates an exemplary environment for implementing a funds transfer system, in accordance with one embodiment of the present subject matter.

Fig. 2 illustrates a block representation of the funds transfer system, in accordance with one embodiment of the present subject matter.

Fig. 3 illustrates a method for secure funds transfer, in accordance with one embodiment of the present subject matter.

### DETAILED DESCRIPTION

Systems and methods for secure transfer of funds initiated over an electronic channel are described. Generally, a customer initiates a funds transfer process through a web-based interface, which is generally provided over the Internet, by a financial institution such as a bank, or through a point-of-sale (POS) terminal, as in case of purchase of a product. The funds transfer may occur as a result of financial transaction between two parties and include both online and retail purchase. The customer provides certain authentication information for processing the transaction, which is needed to be authorized by the bank. However, the transfer of such information may get subverted, and the authentication information of the user may get compromised due to various loopholes and/or malware present in the user's system, for example, "Man in the middle" (MITM) attacks orchestrated by certain malware, sophisticated phishing attacks, and so on. Such a breach may result in the transfer of funds from the user account to the account of a different party, and not to the party that is actually part of the transaction. Furthermore, the amount of funds that gets transferred may also be a substantial amount. This may result in huge losses to users, and may also effect the reputation of financial institutions.

Conventional security measures governing fund transfer systems aim to minimize losses resulting from such attacks only partly, for example, by setting limits on an amount of transaction that may be allowed in a single day, by enabling the users to have more complex passcodes, by encouraging the users to change their passcodes regularly, and so on. Despite of such measures, the security of such authentication information is always a concern.

The present subject matter provides for a method for secure transfer of funds in an efficient manner. In one implementation, a funds transfer request from a user is received on a transaction initiating channel, following a first authentication. The fund transfer request may be in response to a transaction, say a sale-purchase, initiated between two or more parties. Once the first authentication is completed, information in relation to the transaction in question is communicated to the user initiating the fund transfer through another channel, for example, an authorization channel, for authorization. Along with the transaction related information, the user is presented with an information element associated with the user or is requested for an information element associated with the user. The user, on receiving the transaction related information, may verify the same or provide the requested information element. For the case that the transaction related information is associated with the transaction being undertaken, the user may proceed to authorize the transaction by providing the valid information element or verify the information element provided, for example, through the transaction authorization channel. In case of any unauthorized transaction, say a transaction that is occurring without the knowledge of the user, the user may withhold the authorization, thereby resulting in the transaction being declined. In one implementation, the information element can be a single element previously supplied by the user to the bank, or may be one selected from a plurality of such information elements or may also include one or more exclusive information elements provided by the bank to user at the time of opening of an account with the bank, thereby allowing the information element to be an exclusive and non-repeating, or alternative, element. In one implementation, the information element or the transaction related information can also be provided to the user as a challenge-response test image, such as a CAPTCHA^{™} image, over the same channel over which the user had initiated the transaction, i.e., the transaction initiating channel.

The transaction initiating channel can include a variety of interfaces, which the user may use to initiate a transaction. For example, the transaction initiating channel may include web-based interfaces for various e-commerce portal, point-of-sale (POS) terminals, automated teller machines (ATMs), and so on. The transaction being initiated are further authorized over the transaction authorization channel, examples of which may include, a cellular network and other such networks over which the transaction related information and the request for information element can be communicated to the user without any interference of or dependence on the channel over the transaction was initiated.

In one implementation, the first authentication may include providing a user ID and a password. The first authentication may also include furnishing by the user, a one-time transaction password received by the user on either the transaction initiating channel or typically the transaction authorization channel. The one-time transaction password may be received by the user in response to the receiving the funds transfer request by the system, following the first authentication or may also be received in response to a change in access pattern of the user, such as access from a different system. In another implementation, additional mechanisms may also be provided to ensure additional measures to ensure that the transactions being undertaken are from the right customer.

In another implementation, the method for implementing a secure transfer of funds may be initiated based on the transaction related information. Examples of such transaction related information include, but are not limited to, transaction amount, geographic location at which the transaction in question is taking place, etc. As will be noted the systems and methods for secure transfer of funds, as described, allows an additional layer security by enabling the user to authorize the transaction over a second channel, in case the first channel through which the transaction was initiated has been compromised. Further, the transaction authorization channel, such a mobile phone, is a separate system from the initiating channel, such as a web-based interface or a POS terminal, and therefore even an attack on a web interface/POS interface would not compromise the authorization channel. It should be noted that devices such as mobile phones are used by nearly all bank customers. Utilizing the cellular network as the authorizing channels would not require introducing any additional device/cost to the customer. The solution is also user friendly as a mobile phone is generally always carried by its user, and thus any funds transfer request would not be delayed for confirmation, such as in the case of e-mail-based confirmation.

For example, the user can respond via an encrypted short message service (SMS) to verify such a funds transfer request by providing the desired information element or by verifying the information element provided to the user, over the transaction authorization channel. Further, any MITM attack or phishing attack is detected immediately as only a valid user or customer is aware of such exclusive information element, and also because only a valid user can have access to the transaction authorization channel, i.e., the mobile phone, which is pre-authenticated and verified by the user. Even in case the mobile phone gets stolen, any incorrect entry of the information element will result in the transaction being declined. Even further, if the mobile phone network is compromised, somehow, an email notification to the user on a registered e-mail ID may also alert the user of any fraudulent transaction.

While aspects of the described systems and methods can be implemented in any number of different computing systems, environments, and/or configurations, embodiments for the information extraction system are described in the context of the following exemplary system(s) and method(s).

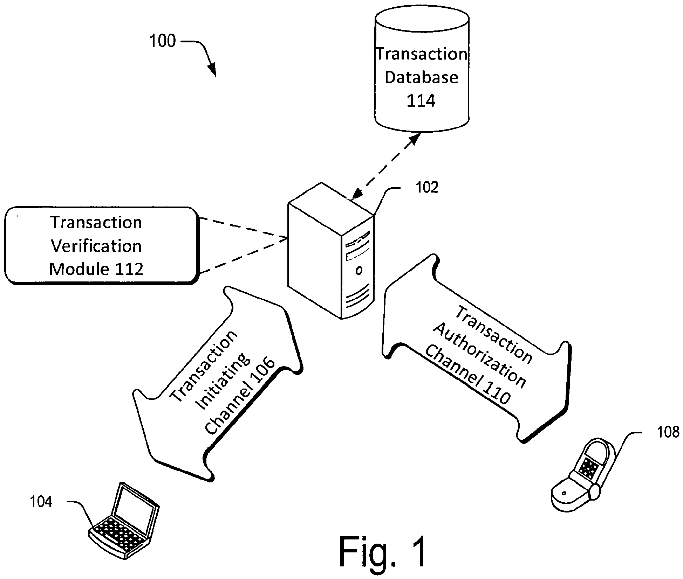

Fig. 1 illustrates an exemplary network environment 100 implementing a funds transfer system 102, according to an embodiment of the present subject matter. The network environment 100 includes a transaction initiating device 104 in communication with the funds transfer system 102 through a transaction initiating channel 106, and a transaction verifying device 108 in communication with the funds transfer system 102 through a transaction authorization channel 110. The transaction initiating device 104 may include a processor-driven computing device or communication device, such as a desktop computer, a laptop computer, a network computer, an online terminal, a hand-held computer, a mobile phone, land line phone, or other similar equipment, POS terminal devices, etc., which are compatible with the transaction initiating channel 106. On the other hand, the transfer verifying device 108 is a processor-driven communication device, such as a mobile phone, land line phone, or other similar equipment, which is compatible with the transaction authorization channel 110

The system 102 may manage network resources, and responds to commands from both the transaction initiating device 104 and the transfer verifying device 108. The system 102 may be any computing device connected to the transaction initiating channel 106 and the transaction authorization channel 110. For instance, the system 102 may be implemented as mainframe computers, workstations, personal computers, desktop computers, hand-held devices, multiprocessor systems, personal digital assistants, laptops, network computers, minicomputers, servers, and the like. The system 102 employs at least one module, such as a transaction verification module 112, for verifying information provided by the user as part of a first authentication. The module is also configured to contact the user, directly, for example, through direct call or SMS, or through email. Further, the system 102, as well as the devices 104 and 108, is provided with computer readable data storage media, such as hard disk drives and RAM memory, which store program instructions and data. The data may also include data pertaining to a transaction history of the user. All such data may also be stored in a database 114, which is communicatively connected to the system 102.

Communication links between the transaction initiating device 104 and the funds transfer system 102 are enabled through various forms of communication, for example, via dial-up modem connections, cable links, digital subscriber lines (DSL), wireless or satellite links, or any other suitable form of communication. In an implementation, the transaction initiating channel 106 may be based on a wireless network, a wired network, an individual network, or a collection of many such individual networks, interconnected with each other and functioning as a single large network, e.g., the Internet or an intranet. Further, the transaction initiating channel 106 can be implemented as one of the different types of networks, such as intranet, local area network (LAN), wide area network (WAN), the Internet, and such. The transaction initiating channel 106 may either be a dedicated network or a shared network, which represents an association of the different types of networks that use a variety of protocols to communicate with each other, for example, Hypertext Transfer Protocol (HTTP), Transmission Control Protocol/Internet Protocol (TCP/IP), Wireless Application Protocol (WAP). The transaction initiating channel 106 and the transaction authorization channel 110 may include network devices, such as network switches, hubs, routers, host bus adapters for providing a link between the funds transfer system 102, hereinafter the system 102.

On the other hand, the transaction authorization channel 110 can be a communication channel based on a communication network that is separate from the one used by the transaction initiating channel 106. In an implementation, the transaction authorization channel 110 is based on a cellular telephone network. The transaction authorization channel 110 may be supported by GSM, CDMA, or satellite-based communication technology. The network devices supporting both the transaction initiating channel 106 and the transaction authorization channel 110 may interact with the system 102, and also among themselves through communication links.

The system 102 facilitates secure transfer of funds for transactions initiated over a transaction initiating channel 106, such as a web-based application on the Internet. In operation, the system 102 receives a funds transfer request initiated by the user over the transaction initiating channel 106 using the transaction initiating device 104, for example, a computer or a point-of-sale terminal device, following a first authentication. In one implementation, the user, as part of the first authentication, may provide details such as payee's account, payee bank name (in case the payee is not a customer of the same bank as the user), transfer amount, and other such details via the web application supported by, for example, a source authorizing these transactions, for example, the bank. In case the transfer request is in respect of a transaction to be made for a product purchased by the user, then the details entered, for example, via the point-of-sale terminal, may include product code, vendor's name, amount to be paid, etc.

In either case, the user is asked to furnish user credentials, which are exclusive to the user and are also saved in a database of the bank, such as the database 114. These user credentials generally include user identification (ID), which may be numeric, alphabetic, or a combination of these two along with special characters, along with a password. Once the user credentials are verified, the transaction verification module 112 creates a summary of the funds transfer request including transaction related information. The summary along with a request for an information element is then communicated by the transaction verification module 112 to the user over the transaction authorization channel 110 to a transaction verifying device 108. The information element may be one selected from a plurality of information elements, previously supplied by the user or by the bank, or a transaction history, or a content supplied as a CAPTCHA image. In one implementation, the information elements to be presented to the user may be selected in a random manner and is provided in a non-repeating manner.

The user upon receiving the summary on the transaction verifying device 108 is then requested to verify the summary including the transaction related information. In case the transaction related information is valid, the user may authorize the funds transfer to take place by providing the requested information element. In one implementation, the information element may include information related to the user such as last transaction amount, last deposit amount, or last withdrawal amount. As mentioned earlier, the information element is an exclusive piece of information associated with the user and known only to the user and the bank. The information element may also include information in the form of a PIN known to the user, such as an ATM PIN, or an answer to a personal query about the user. In yet another implementation, the transaction can be declined based on thresholds parameters defined by user. For example, the user may have a set a limit defining that the secure fund transfer as described is initiated only in case the transaction amount.

In case the transaction related information received by the user is such that it relates to a transaction not initiated by the user, the user may reject the funds transfer request thereby declining the fund transfer for the transaction under consideration. In one implementation, the user may select a "Reject" option provided along with the transaction related information.

In another implementation, there may be the case that the user has actually initiated the funds transfer request, but somehow the user could not get the first authentication verified due to reasons such as lack of physical, intellectual, or technical capabilities of the user. In such a case, the user may be contacted directly, when verification on either of the channels fails, over a registered mobile phone of the user and can be asked to verify the funds transfer request, provide the corresponding information element, etc. In case, the user successfully furnishes the corresponding information element correctly, the funds transfer request can be allowed. Otherwise, the user is asked to reset the information element(s) by logging into the bank's website or contact the bank, in person, suspecting a possible MITM attack. In addition, while the user is being contacted on the mobile phone, the user may also be asked to provide, over a secure channel, a telephone banking PIN before being asked for the corresponding information element, to further add up the security.

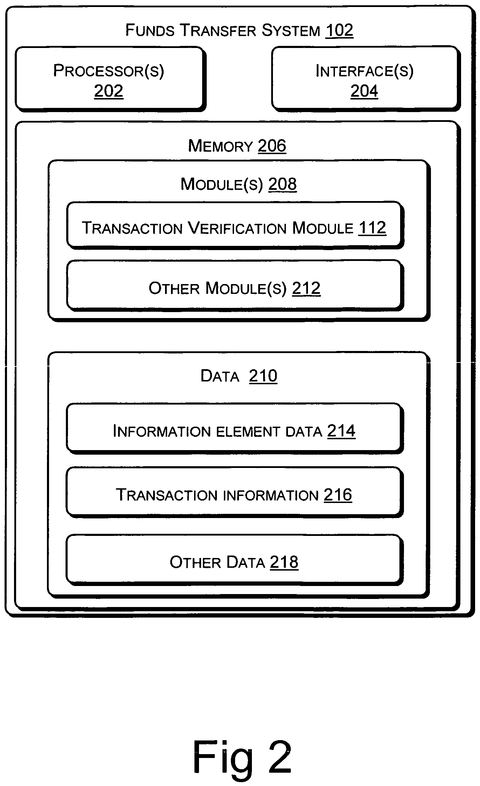

Figure 2 illustrates a block representation of the funds transfer system 102, in accordance with one embodiment of the present subject matter. The funds transfer system 102, or interchangeably, the system 102 includes processor(s) 202, input and output (I/O) interfaces 204, and a memory 206. The memory further includes module(s) 208 and data 210.

The processor(s) 202 can be a single processing unit or a combination of multiple processing units. The processor(s) 202 can be implemented as one or more microprocessors, microcomputers, microcontrollers, digital signal processors, central processing units, state machines, logic circuitries, or any devices that manipulate signals based on operational instructions. Among other capabilities, the processor(s) 202 are configured to fetch and execute computer-readable instructions and data 210 stored in the memory 206.

The I/O interfaces 204 may include a variety of software and hardware interfaces, for example, interface for peripheral device(s) such as a keyboard, a mouse, an external memory, a printer, etc. Further, the I/O interfaces 204 enable the system 102 to communicate with other computing devices, such as web servers and external databases. The I/O interfaces 204 may facilitate multiple communications within a wide variety of protocols and networks, such as the networks facilitating the transaction initiating channel 106 and the transaction authorization channel, 110 including wired networks, e.g., local area network (LAN), cable, etc., and wireless networks, e.g., wireless LAN, cellular, satellite, etc. The I/O interfaces 204 may include one or more ports for connecting the system 102 to a number of computing devices, such as the transaction initiating device 104 and the transaction verifying device 108.

The memory 206 may include any computer-readable medium known in the art including, for example, volatile memory (e.g., random access memory or RAM) and/or nonvolatile memory (e.g., flash memory). The memory 206 includes module(s) 208, which, in general, include routines, programs, objects, components, data structures, etc., each of which performs a particular task or implements particular abstract data types. The modules 208 may include the transaction verification module 112. The transaction verification module 112 is configured to, among other things, perform a first authentication of a funds transfer request on a channel other than a channel on which such funds transfer request is received. Further, the modules 208 may also include other module(s) 212, which may include programs that supplement applications implemented by the system 102.

Furthermore, the memory 206 includes data 210, which, amongst other things, serves as a repository for storing data received, processed, and generated by the module(s) 208. The data 210 may include, for example, information element data 214, transaction related information as transaction information 216 and other data 218. The other data 218 includes data generated as a result of the execution of one or more modules in the other modules 208.. The information element data 214 and the transaction information 216 may be internal to the system 102, however it will be understood that the information element data 214 can be stored on an external database, for example, the database 114.

In operation, the transaction verification module 112, on receiving a funds transfer request from the user on the transaction initiating channel 106 following the first authentication, generates a summary of the funds transfer request. In one implementation, the summary of the funds transfer request can be stored in the transaction information 216. Once the transaction information 216 is generated, the transaction verification module 112 communicates the same along with a request for an information element over the transaction authorization channel 110 to the transaction verifying device 108 for authorization from the user.

The transaction information 216 may specify at least a payee name, a payee account number, a payee bank name, the transfer amount, and a vendor name when applicable, etc. On the other hand, the information element requested from the user may be a user-specific non-repeating information element, which is known to the user and the bank, only. On receiving the summary and the at least one non-repeating information element, the user may verify the transaction information 216 to authenticity of the transaction being undertaken. If on verification of the transaction information 216, the user determines that the information is related to a transaction not being undertaken by him, the user may proceed and communicate an indication to decline the transaction. In such a case, the transaction initiated is cancelled and the funds declined.

If, however, on verification of the transaction information 216, the user determines the particulars of the transaction are proper, the user provides the desired information element in response to the request received from the system 102 over the transaction authorization channel 110. For example, the user may be asked to provide the PIN as well as another element as part of the desired information element. The transaction verification module 112 on receiving the information element provided by the user may compare the same with the information element data 214. On determining that the information element provided by the user is authentic based on the comparison, the transaction verification module 112 may process the transaction and allow the funds to be transferred, thereby completing the transaction.

In an implementation, the user may further define a threshold amount. In case the transaction verification module 112 determines that the transfer amount specified is more than the defined threshold, additional security measures can be implemented to ensure added protection for transaction involving higher amounts. In one implementation, the transaction verification module 112 on determining that the transaction amount is higher than the predefined threshold, may forward an alert message to the respective source or financial institution, for example, the bank. On receiving such an alert, a representative from such financial institution may further contact the user to verify whether such a transaction is being undertaken by the user or not.

In another implementation, the transaction verification module 112 may communicate the transaction information 216 and the request for the information element, say in the form a CAPTCHA image, over the web-based interface, such as the transaction initiating channel. In one implementation, the user may ascertain that the request for the information element is coming from a valid source. In an implementation, once the user has provided the desired information, the transaction verification module may send a second CAPTCHA image, which may include a random image for the user to identify contents shown therein into a text entry input. The user, upon verifying the contents of the second CAPTCHA image, proceeds towards resolution of the funds transfer request. If on providing the correct transaction password, it is determined that the transfer amount is more than a threshold, in one implementation, a third CAPTCHA image is sent to the user over the transaction initiating channel 106, the contents of which, may then be supplied or verified over the transaction authorization channel 110. If the transfer amount is more than a threshold, the financial institution may initiate a call on a registered mobile phone of the user in order to get the transaction verified personally by the user.

In an implementation, the first CAPTCHA image may include user-specific information known to the user and the bank only, such as payee bank code "B# XXXXX", payee account number "A# XXXXXXXXX", a transfer amount "$XXXXX", while an information element may include last transaction amount "L$XXXX", last deposit amount "LD$XXX", last withdrawal amount "LW$XXXX", or a number from previously communicated number list such as "#XXX#XXXXXXX", where first number is an index to the list and second number is a value. Further, the second CAPTCHA image may include a random string such as "as4$5a&*sg" or a calculation like "589 + 1 - 10 =" or a question such as "capital of Karnataka?", whose answer needs to be provided by the user. The third CATCHA image may be similar to the second CAPTCHA image.

In another implementation, the transaction may also be declined based on a defined number of unsuccessful attempts for providing the information element, where appropriate alert text has been provided each time the user inputs wrong data in respect of the information element.

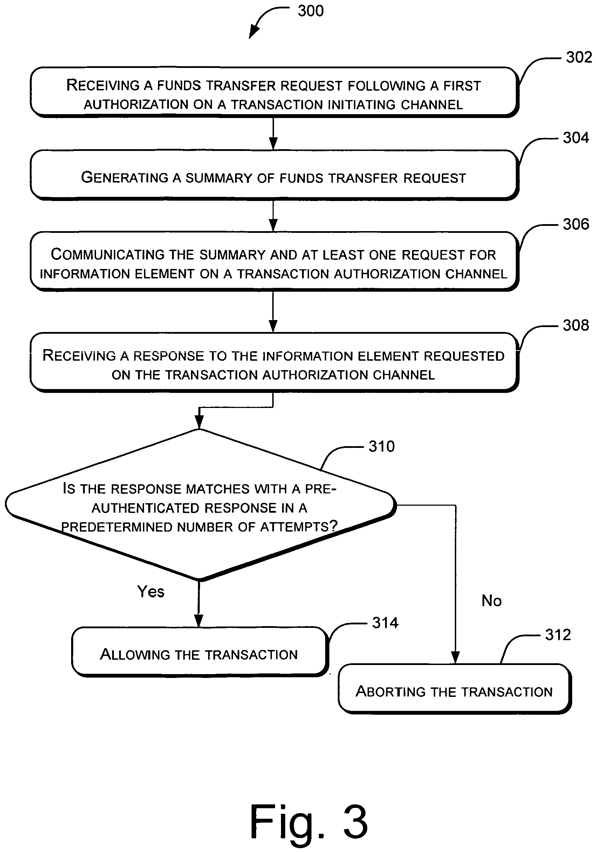

Fig. 3 illustrates a method for secure transfer of funds, in accordance with one embodiment of the present subject matter.

The method may be described in the general context of computer executable instructions. Generally, computer executable instructions can include routines, programs, objects, components, data structures, procedures, modules, functions, etc., that perform particular functions or implement particular abstract data types. The method may also be practiced in a distributed computing environment where functions are performed by remote processing devices that are linked through a communications network. In a distributed computing environment, computer executable instructions may be located in both local and remote computer storage media, including memory storage devices.

The order in which the method is described is not intended to be construed as a limitation, and any number of the described method blocks can be combined in any order to implement the methods, or an alternative method. Additionally, individual blocks may be deleted from the methods without departing from the spirit and scope of the subject matter described herein. Furthermore, the methods can be implemented in any suitable hardware, software, firmware, or combination thereof. The method is provided for secure transfer of funds over an electronic channel. However, it will be appreciated that the same method can also be implemented for a plurality of users without deviating from the scope of the present subject matter.

At block 302, a funds transfer request is received on a transaction initiating channel following a first authentication. The funds transfer request may be received through a web-based interface, generally provided over the Internet, for example, by a bank, or at a POS terminal. The funds transfer request may include details such a payee's name, payee's bank name (in case it is different from the user's bank), and transfer amount. In case the user has purchased a product using a credit or debit card and a transaction is initiated over a POS terminal, the system may receive, as part of the funds transfer request, details of the product purchased, vendor name, amount spent, etc. In one implementation, the first authentication may include providing a user ID and a password. The first authentication may also include furnishing by the user, a one-time transaction password received by the user on either the transaction initiating channel or the transaction authorization channel. In another implementation, additional mechanisms may also be provided to ensure additional measures to ensure that the transactions being undertaken are valid.

At block 304, a summary of the funds transfer request is generated. In an implementation, as apart of verification of the first authentication, a second authentication is carried out, which involves generating a summary of the funds transfer request. The summary may include information related to the intended transaction. The summary may specify at least one of a payee name, a payee bank name, a vendor name, the transfer amount, etc.

At block 306, the summary and at least one request for information element is communicated to the user on a transaction authorization channel. In an implementation, the information element is either provided to the user for the user to verify it or the user is requested to provide the desired information element corresponding to a request for an information element communicated to the user along with the summary. Further, the transaction authorization channel may include a mobile phone service-based channel implemented using a mobile communicating device such as a mobile phone. In an implementation, the funds transfer request is received and verified on the same channel on which the funds transfer request is received by the system, i.e., the transaction initialing channel, unless a transfer amount is equal to or more than a threshold. In such an implementation, the summary and the information element are provided to the user in the form of a CAPTCHA image and/or, the user is asked to provide the desired information element in response to a request for such an information element, which may also be presented to the user along with the summary. The user may be communicated through the registered mobile phone of the user, for example, via an SMS, which may include the summary and the requested information element. The user may respond to such a communication via an encrypted SMS with the desired information element, or a verification of the information element that is being supplied on the registered mobile phone, or the user may be put up with one or more requests for such information element(s) in the form of questions and answers, directly over the mobile phone, for the user to respond, in person. Each response from the user to a question seeking an answer that is exclusive to the user is matched with the information element already saved in a database of the bank.

At block 308, a response to the information element requested is received on the transaction authorization channel. In an implementation, the user, upon receiving the CAPTCHA image, sends a response as part of the second authorization. If on verification of the summary, the user determines that the information is related to a transaction not being undertaken by him, the user may proceed and communicate an indication to decline the transaction. In such a case, the transaction initiated is cancelled and the funds declined. Otherwise, the user provides the information element in response to the request received from the system 102 over the transaction authorization channel 110. In an implementation, once the user has provided the desired information, the transaction verification module may further send a second CAPTCHA image, which may include a random image for the user to identify contents shown therein into a text entry input. The user, upon verifying the contents of the second CAPTCHA image, proceeds towards resolution of the funds transfer request. In yet another implementation, in case the transfer amount is more than a threshold, a third CAPTCHA image may be sent to the user. Upon a failed verification of contents the third CAPTCHA image by the user, the financial institution may be alerted and a customer representative then make a call to the user over the registered mobile phone of the user.

The first CAPTCHA image may include information such as payee bank code "B# XXXXX", payee account number "A# XXXXXXXXX", a transfer amount "$XXXXX". The information element may include user-specific information such as last transaction amount "L$XXXX", last deposit amount "LD$XXX", last withdrawal amount "LW$XXXX", or a number from previously communicated number list like "#XXX#XXXXXXX", where first number is an index to the list and second number is a value.

Further, the second CAPTCHA image may include a random string such as "as4$5a&*sg" or a calculation like "589 + 1 - 10 = ", whose answer needs to be entered by the user. The third CATCHA image may be similar to the second CAPTCHA image and may include a string like "a4e5h" or a calculation like "5174 -11 = ", whose answer needs to be provided, for example, through the registered mobile phone on the transaction authorization channel.

At block 310, it is determined whether the response matches with a pre-authenticated response in a predetermined number of attempts. In an implementation, the information element provided by the user is compared with the information element data saved. For this, the user may get a predetermined number of attempts to enter a correct response. On determining that the information element provided by the user is authentic based on the comparison, the transaction is processed and the funds to be transferred are allowed or declined, at block 312 or 314, thereby resolving the transaction.

In an implementation, the user may further define a threshold amount. In case it is determined that the transfer amount specified is more than the defined threshold, additional security measures can be implemented to ensure added protection for transaction involving higher amounts. In such a case, in one implementation, an alert message may be forwarded to the respective financial institution. On receiving such an alert, a representative from such financial institution may further contact the user to verify whether such a transaction is being undertaken by the user or not. In an implementation, the user, when contacted directly, may also be asked to enter a phone banking PIN through the registered mobile phone before being asked for the requested information element, as part of added security.

In case the funds transfer request is rejected based on non-matching of the response with the information element provided by the user, in a given number of attempts, an email is sent to a registered email of the user. In case, the user does not respond to the email, a daily transaction limit allowed to the user may be lowered.

Although embodiments for a funds transfer system for secure transfer of funds electronically have been described in language specific to structural features and/or methods, it is to be understood that the invention is not necessarily limited to the specific features or methods described. Rather, the specific features and methods are disclosed as exemplary embodiments for the disclosed system and methods.

## Claims

1. A method for secure transfer of funds, the method comprising:
receiving a funds transfer request from a user on a transaction initiating channel (106), following a first authentication;
verifying the first authentication on a transaction authorization channel (110) based on a second authentication, wherein the second authentication is based partly on at least one information element, the at least one information element comprising one or more non-repeating information elements exclusively associated with the user and known to a source authorizing the funds transfer request; and
completing the transfer of funds as per the fund transfer request, based at least on the verifying.

2. The method as claimed in claim 1, wherein the verifying comprises:
generating a summary of the funds transfer request;
communicating the summary and at least one request for the information element to the user on the transaction authorization channel (110);
receiving a response from the user on the transaction authorization channel (110); and
matching the response along with the information element provided by the user in a predetermined number of attempts.

3. The method as claimed in claim 2 further comprising sending an alert to an authenticated email address of the user in case of the predetermined number of one of a first authentication attempt and a second authentication attempt is exhausted without success.

4. The method as claimed in claim 1 further comprises determining whether a transfer amount is one of lower than, equal to, and more than a threshold.

5. The method as claimed in claim 4, wherein, based on the determining, communicating a summary of the funds transfer request and a request for the at least one information element to the user on the transaction authorization channel (110) in case the transfer amount is greater than or equal to a configurable threshold.

6. The method as claimed in claim 5, wherein the method comprises contacting the user directly, on an authenticated cellular connection of the user, in case the transfer amount is greater than or equal to the configurable threshold.

7. The method as claimed in claim 4, wherein the method further comprises setting a daily funds transfer limit to a value lower than a funds transfer limit initially subscribed to the user in case the user fails to confirm, within a predetermined period of time, a validity of at least one transaction previously completed.

8. The method as claimed in claim 1, wherein the first authentication comprises receiving from the user over the transaction initiating channel (106), a user identification number and an authentication password.

9. The method as claimed in claim 1, wherein the first authentication further comprises furnishing, by the user, a one-time transaction password on at least one of the transaction initiating channel (106) and the transaction authorization channel (110), wherein the one-time transaction password is received by the user in response to the receiving the funds transfer request, following the first authentication, on one of the transaction initiating channel (106) and the transaction authorization channel (110).

10. The method as claimed in claim 1, wherein the verifying comprises sending at least one reverse turing test to the user on at least one of the transaction initiating channel (106) and the transaction authorization channel (110), wherein the at least one reverse turing test comprises at least one challenge-response test image for the user to verify.

11. The method as claimed in claim 2, wherein the communicating comprises sending the summary and the at least one information element to the user using one of a voice message service and a short message service.

12. A system for secure transfer of funds comprising:
a processor (202);
a memory (206) coupled to the processor, wherein the memory comprises,
a transaction verification module (112), configured to
receive a funds transfer request from a user on a transaction initiating channel (106), following a first authentication, and
resolve the funds transfer request by verifying the first authentication based on a second authentication, on at least one of a transaction initiating channel (106) and a transaction authorization channel (110), the second authentication being based on at least one information element, the information element comprising one or more non-repeating information elements exclusively associated with the user and known to a source authorizing the funds transfer request.

13. The system as claimed in claim 12, wherein the transaction verification module (112) is configured to:
generate a summary of the funds transfer request;
communicate the summary and a request for the at least one information element to the user, on the at least one of the transaction initiating channel (106) and the transaction authorization channel (110); and
receive a response from the user on the transaction authorization channel (110).

14. The system as claimed in claim 12, wherein the transaction authorization channel (110) is authenticated and verified by the one of the user and the source authorizing the funds transfer request.

15. A computer-readable medium having embodied thereon a computer program for executing a method comprising:
receiving a funds transfer request from a user on a transaction initiating channel (106), following a first authentication;
verifying the first authentication on a transaction authorization channel (110) based on a second authentication, wherein the second authentication is based partly on at least one information element, the at least one information element comprising one or more non-repeating information elements exclusively associated with the user and known to a source authorizing the funds transfer request; and
completing the transfer of funds as per the fund transfer request, based at least on the verifying.
